# FASCICULE DE BREVET EUROPEEN

(11) **EP 0 945 226 B1**
(45) Date de publication et mention de la délivrance du brevet: **12.06.2002**
(21) Numéro de dépôt: 99440054.7
(22) Date de dépôt: 16.03.1999
(51) Int. Cl.: B25J 9/02

(54) **Dispositif de robot manipulateur cartésien**
Handhabungsroboter des kartesischen Typs
Cartesian coordinate-type material handling robot

(30) Priorité: 24.03.1998 FR 9803788
(43) Date de publication de la demande: 29.09.1999
(73) Titulaire: Automatisme et Robotique Chaveriat dite Auroch S.A., 39260 Moirans en Montagne (FR)
(72) Inventeur: Chaveriat, Christian, 39170 Lavans-les-Saint-Claude (FR)
(74) Mandataire: Rhein, Alain

(56) Documents cités:
- EP-A- 0 508 130
- EP-A- 0 512 126

## Description

La présente invention a pour objet un dispositif de robot manipulateur cartésien pour presse à injecter.

Une presse à injecter réalise automatiquement, à une certaine cadence, des objets qui sont saisis par un robot manipulateur qui les stocke temporairement à proximité de ladite presse avant qu'ils ne soient transférés sur un lieu de conditionnement par exemple, le stockage temporaire permettant notamment une inspection de la qualité d'injection.

Un robot manipulateur de type cartésien comporte un préhenseur susceptible d'évoluer dans les trois dimensions, à cet effet ledit robot comporte une poutre support sur laquelle peut se déplacer longitudinalement une poutre qui lui est perpendiculaire, et le long de laquelle peut se déplacer une colonne portant ledit préhenseur et permettant le déplacement de celui-ci dans le sens vertical.

La surface de stockage temporaire dans laquelle évolue le préhenseur est donc délimitée par d'un côté la poutre fixe et de l'autre côté par la longueur de la poutre mobile.

Les progrès en matière d'injection permettent d'atteindre des cadences de production très élevées, en sorte que la zone de stockage temporaire devient rapidement insuffisante.

D'autre part, dans un but de rentabilisation de la surface au sol sur un lieu de travail, l'espace réservé à une presse à injecter et son robot manipulateur est très restreint, et l'allongement des poutres, pour éventuellement augmenter la surface de stockage temporaire, ne pourrait être réalisé qu'au détriment de la productivité.

La présente invention a pour but de remédier à cet inconvénient en proposant un dispositif de robot manipulateur cartésien permettant d'accroître la surface de la zone de stockage temporaire, sans allongement de la poutre support.

Le dispositif de robot manipulateur cartésien selon l'invention comporte les caractéristiques incluses dans la revendication 1.

Le dispositif de robot manipulateur cartésien selon l'invention permet ainsi, tout en occupant au sol la même surface qu'un dispositif de robot manipulateur de type classique, de créer deux zones de stockage temporaire supplémentaires, une première zone en extrémité du moyen de transfert horizontal fixe, sur toute la longueur de déplacement du moyen de transfert vertical sur le moyen de transfert horizontal mobile, et une seconde zone de l'autre côté dudit moyen de transfert horizontal fixe, sur toute la longueur de déplacement dudit moyen de transfert horizontal mobile sur ledit moyen de transfert horizontal fixe. A noter que, en allongeant le moyeu de transfert horizontal mobile, la seconde zone peut être étendue.

La présente invention sera mieux comprise à la lecture de la description qui va suivre se rapportant au dessin joint en annexe et dans lequel :
- la figure 1 représente une vue de côté d'un dispositif de robot manipulateur cartésien de type classique.
- la figure 2 représente une vue de dessus du même dispositif.
- la figure 3 représente une vue de côté d'un dispositif de robot manipulateur cartésien selon l'invention.
- la figure 4 représente une vue de dessus du même dispositif.

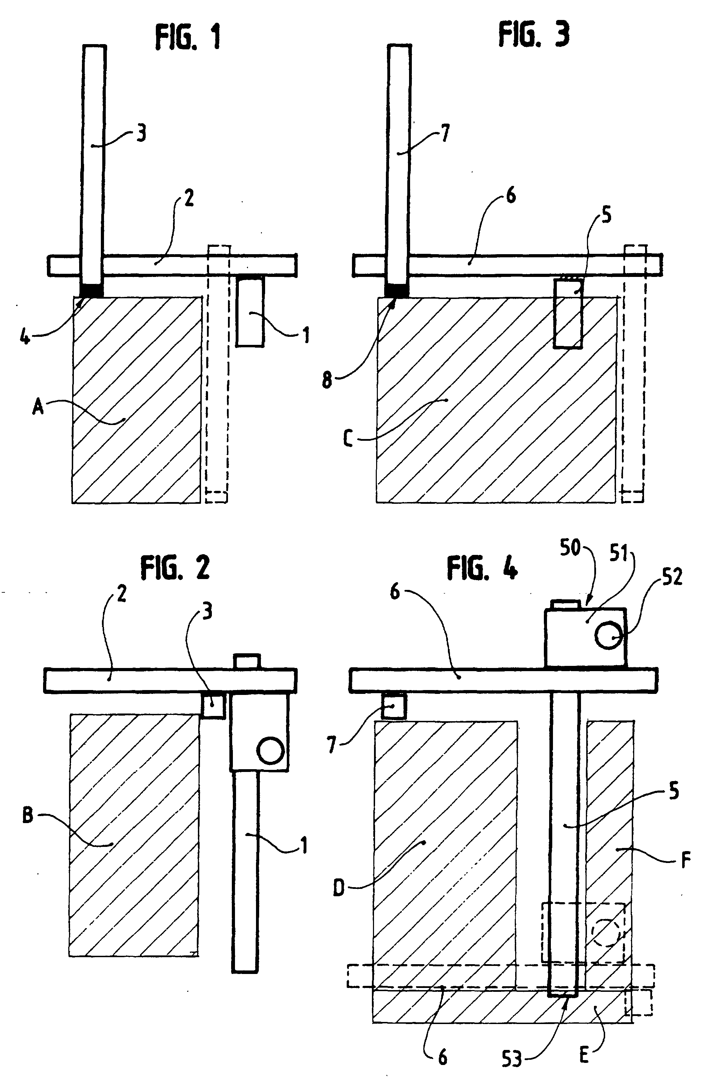

Si on se réfère aux figures 1 et 2, on peut voir qu'un dispositif de robot manipulateur cartésien de type classique comporte une poutre support fixe 1 de transfert horizontal sur laquelle peut se déplacer longitudinalement une poutre 2 de transfert horizontal perpendiculaire à la poutre support 1, et sur laquelle peut se déplacer une colonne 3 de transfert vertical d'un préhenseur 4, la colonne 3 étant représentée sur la figure 1 dans deux positions extrêmes, à savoir, d'une part, en déplacement horizontal sur la poutre 2, et d'autre part en déplacement dans le sens vertical.

Le déplacement de la poutre mobile 2 sur la poutre support 1, et de la colonne 3 sur cette dernière, sont réalisés par des moyens connus en soi du type chaîne, qui ne seront pas décrits.

Par l'intermédiaire des poutres 1 et 2 et de la colonne 3, le préhenseur 4 peut évoluer dans un volume délimité par le plan vertical A et la surface au sol B représentés respectivement sur les figures 1 et 2 par des hachures.

Si on se réfère maintenant aux figures 3 et 4, on peut voir qu'un dispositif de robot manipulateur cartésien selon l'invention comporte une poutre support 5 de transfert horizontal sur laquelle peut se déplacer une poutre 6 de transfert horizontal, perpendiculaire à la poutre support 5 et sur laquelle peut se déplacer longitudinalement une colonne 7 de transfert vertical d'un préhenseur 8.

On notera que sur la figure 3, le préhenseur 8 est représenté dans deux positions extrêmes, à savoir, d'une part, en déplacement horizontal sur la poutre 6, et, d'autre part, en déplacement dans le sens vertical, tandis que sur la figure 4, la poutre 6 est représentée dans les deux positions extrêmes qu'elle peut prendre sur la poutre support 5.

Comme on peut le voir sur la figure 4, les éléments 50 de liaison de la poutre support 5 et de la poutre mobile 6, en l'occurrence une platine 51 qui porte le moteur d'entraînement 52 de la poutre mobile 6 sur la poutre support 5, ne débordent pas du côté sur lequel est solidarisée la colonne 7, mais se prolongent de l'autre côté, en sorte que cela autorise le déplacement de la colonne 7 sur toute la longueur de la poutre 6 en passant au-delà de l'extrémité 53 de la poutre fixe 5.

Le préhenseur 8 peut être mû au-delà de l'extrémité 53 de la poutre support 5, dans un plan vertical C représenté sur la figure 3 par des hachures. Cela lui permet, en association avec le mouvement de la poutre mobile 6, de se déplacer des deux côtés de la poutre support 5.

Le stockage temporaire peut ainsi être réalisé sur trois zones dont les surfaces au sol sont représentées par des hachures sur la figure 4, à savoir, une zone D, similaire à la zone B du dispositif de robot classique représenté sur la figure 2, une zone E en extrémité de la poutre support 5 sur pratiquement toute la longueur de la poutre mobile 6, et une zone F le long de la poutre support 5, du côté opposé à celui comportant la zone D.

## Revendications

1. Dispositif de robot manipulateur cartésien pour presse à injecter du type comportant une poutre support horizontale fixe (5) sur laquelle se déplace, dans une première direction horizontale, une poutre horizontale mobile (6) le long de laquelle peut se déplacer, dans une deuxième direction horizontale, une colonne (3) verticale portée du côté de la poutre mobile de manière qu'elle soit mobile dans la direction verticale pour déplacer un préhenseur porté à l'extrémité inférieure de la colonne (3), **caractérisé en ce que** ledit moyen de transfert vertical (7) est susceptible d'évoluer d'un côté ou de l'autre dudit moyen de transfert horizontal fixe (5) en passant au-delà d'une extrémité (53) et/ou au-dessus de celui-ci par l'intermédiaire dudit moyen de transfert horizontal mobile (6), qui porte ledit moyen de transfert vertical (7) du côté de l'extrémité (53) dudit moyen de transfert horizontal fixe (5) susceptible d'être débordé par ledit moyen de transfert vertical (7), tandis que les éléments de liaison et d'entraînement (51, 52) dudit moyen de transfert horizontal mobile (6) sur ledit moyen de transfert horizontal fixe (5) sont disposés de l'autre côté.

## Claims

1. Cartesian coordinate-type material handling robot for an injection press, of the type including a fixed horizontal bearing beam (5) on which moves, in a first horizontal direction, a movable horizontal transfer beam (6) alongside which can move, in a second horizontal direction, a vertical column (3) borne at the side of the movable beam, so that it is movable in a vertical direction, in order to move a gripper borne at the lower end of the column (3), **characterised in that** said vertical transfer means (7) is capable of moving at either side of said fixed horizontal transfer means (5), by moving beyond an end (53) and/or above the latter, through said movable horizontal transfer means (6) bearing said vertical transfer means (7) at the side of the end (53) of said fixed horizontal transfer means (5) beyond which said vertical transfer means (7) can protrude, while the connecting and driving elements (51, 52) for said movable horizontal transfer means (6) on said fixed horizontal transfer means (5) are arranged at the other side.

## Patentansprüche

1. Kartesische Handlingsrobotervorrichtung für eine Injektorpresse, des Typs, der einen festen, waagerechten Tragbalken (5) umfaßt, auf dem sich ein beweglicher, waagerechter Transferbalken (6) gemäß einer ersten, waagerechten Richtung verschiebt, entlang dem sich eine an der Seite des beweglichen Balkens getragene, lotrechte Säule (3) gemäß einer zweiten, waagerechten Richtung verschieben kann, derart, daß sie in lotrechter Richtung beweglich ist, um einen am unteren Ende der Säule (3) getragenen Greifer zu verschieben, **dadurch gekennzeichnet, daß** das genannte, lotrechte Transfemüttel (7) in der Lage ist, sich an der einen oder der anderen Seite des genannten festen, waagerechten Transfermittels (5) zu bewegen, indem es über ein Ende (53) hinaus und/oder oberhalb dieses letzten bewegt, und zwar über das genannte bewegliche, waagerechte Transfermittel (6), das das genannte lotrechte Transfermittel (7) an derjenigen Seite des Endes (53) des genannten festen, waagerechten Transfermittels (5) trägt, über die das genannte lotrechte Transfermittel (7) hinausragen kann, während die Verbindungs- und Antriebsglieder (51, 52) für das genannte bewegliche, waagerechte Transfermittel (6) auf dem genannten festen, waagerechten Transfermittel (5) an der anderen Seite angeordnet sind.
